# EUROPEAN PATENT SPECIFICATION

(11) **EP 2 813 379 B1**
(45) Date of publication and mention of the grant of the patent: **19.08.2015**
(21) Application number: 13171498.2
(22) Date of filing: 11.06.2013
(51) Int. Cl.: B60C 23/04

(54) **Magnetic force transmission type tire pressure sensor device and related setting tool and setting method**
Reifendrucksensorvorrichtung mit Magnetfeldübertragung und zugehöriges Einstellwerkzeug und Einstellverfahren
Dispositif de capteur de pression de pneu de type transmission de force magnétique et outil et procédé de réglage associés

(43) Date of publication of application: 17.12.2014
(73) Proprietor: CUB Elecparts Inc., Changhua County (TW)
(72) Inventor: Yu, San-Chuan, Changua County (TW); Wang, Tsan-Nung, Changhua County (TW); Chen, Ying-Pi, Changhua County (TW)
(74) Representative: Becker Kurig Straus

(56) References cited:
- US-A1- 2004 070 494
- US-A1- 2004 206 167
- US-A1- 2005 071 057
- US-A1- 2008 117 037

## Description

### BACKGROUND OF THE INVENTION

### 1. Field of the Invention

The present invention relates to tire pressure monitoring technology and more particularly, to a setting method for setting the magnetic force transmission type tire pressure sensor device.

### 2. Description of the Related Art

Setting of commercial tire pressure sensor devices during installation is done in a wireless manner, i.e., using a setting tool to transmit a predetermined communication protocol or ID data to the tire pressure sensor device to finish the setting. Sending a signal by radio needs to modulate the dominant frequency to a predetermined level more than ten times over the frequency of the data. In consequence, the dominant frequency drive circuit and the mating demodulator circuit are complicated and consume much electrical power during operation. Further, extending the transmission distance of a radio signal requires a larger transmission power, however, long transmission distance is susceptible to interference or can cause signal distortion due to Doppler effect. Further, in various countries, it needs to apply for permission to sell wireless signal transmission equipment.

US 2008/117037 discloses programmable wireless sensors that comprise a power supply, a sensing component, a transmitting component adapted to transmit information obtained by the sensing device or information derived from information obtained by the sensing component, a receiving component adapted to receive software, a memory component adapted to store received software, and control logic. The control logic includes logic operable to execute stored software. The stored software, when executed, is operable to program at least one operating characteristic of the programmable wireless sensor. Also disclosed are systems useful in selecting software to program or reprogram programmable wireless sensors. The programmable wireless sensors may be programmed or reprogrammed to emulate conventional wireless sensors, such as conventional TPMS sensors

US 2005/071057 pertains to a tire monitoring system with a wireless setting capability including a wireless controller and multiple tire status sensors each of which is composed of a sensing and processing unit having an unique tire serial number, a low frequency transceiver and an RF transmitter. The wireless controller also has a low frequency transceiver and stores multiple tire serial numbers representing different wheel positions. The wireless controller outputs a control signal including a reset command and a new tire serial number to a specific tire status sensor. The sensing and processing unit will be reset and replace the tire serial number when the tire status sensor receives the control signal.

US 2004/206167 refers to a tire positioning tool that can be utilized to work with remote tire monitoring systems made by different manufacturers. The tire positioning tools are capable of activating RTMS tire sensors using one of a plurality of methods. Tire positioning tools can be cable of receiving signals from RTMS tire sensors using a plurality of different frequencies, and of transmitting data to a RTMS receiving unit and/or receiving data from a RTMS receiving unit using a plurality of signal frequencies. Using the tire positioning tool, a technician tasked to install a new tire or to rotate tires can utilize a single tool to work with remote tire monitoring systems made by different manufacturers.

US 2004/070494 specifies a circuit and method for coupling signals to a tire pressure monitoring system assembled within the interior of a tire in the absence of a receiver. The circuit comprises a coupling circuit that provides capacitance or electromagnetic coupling to pass an externally-derived stream of pulses to a microprocessor therein by either, in the case of capacitance coupling, connecting an external device that generates the stream of externally-derived of pulses to a valve stem of the tire and an electrical ground. In the case of electromagnetic coupling, a suitable external device is placed proximate to the coupling circuit. The stream of pulses carries information usable by the microprocessor to perform a respective operational function.

All these issues still have room for improvement.

### SUMMARY OF THE INVENTION

The present invention has been accomplished under the circumstances in view. It is the main object of the present invention to provide a setting method for setting a magnetic force transmission type tire pressure sensor device, which utilizes a magnetic force to transmit a wireless signal without any carrier, simplifying the circuit design, saving electrical power consumption and being free from the restrictions of telecommunication regulations.

To achieve this and other objects of the present invention, a setting method for a magnetic force transmission type tire pressure sensor device includes: a tire pressure sensor device having installed therein a magnetic force sensor unit for sensing lines of magnetic flux being transmitted by a magnetic force transmitter unit in a setting tool. The magnetic force sensor unit outputs the waveform of the sensed magnetic force to a microcontroller unit of the tire pressure sensor device where the microcontroller unit converts the received data into the original control program.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a functional block diagram of a magnetic force transmission type tire pressure sensor device.
FIG. 2 is a functional block diagram of a magnetic force transmission type tire pressure sensor device setting tool.
FIG. 3 is a circuit diagram of a part of the tire pressure sensor device setting tool and the tire pressure sensor device.
FIG. 4 is a tire pressure sensor device setting tool operating flow chart in accordance with the present invention.
FIG. 5 is a tire pressure sensor device operating flow chart in accordance with the present invention.

### DETAILED DESCRIPTION OF THE INVENTION

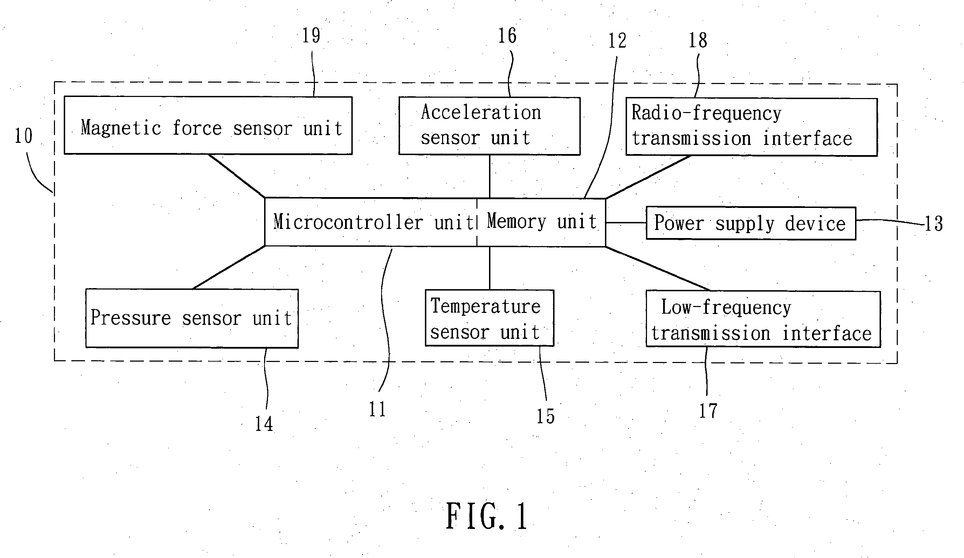

Referring to FIGS. 1-3, a magnetic force transmission type tire pressure sensor device and setting tool system to be used with the method of the present invention may comprise a tire pressure sensor device **10** and a setting tool **20** mating the tire pressure sensor device **10.**

The tire pressure sensor device **10**, as shown in FIG. 1, comprises a microcontroller unit **11**, a memory unit **12** electrically connected to the microcontroller unit **11**, a power supply device **13**, for example, a battery cell electrically connected to the microcontroller unit **11** and adapted to provide the tire pressure sensor device **10** with the necessary working electricity, a pressure sensor unit **14** electrically connected to the microcontroller unit **11** and adapted to measure the internal air pressure of the tire, a temperature sensor unit **15** electrically connected to the microcontroller unit **11** and adapted to measure the internal temperature of the tire, an acceleration sensor unit **16** electrically connected to the microcontroller unit **11** and adapted to measure the acceleration of the tire, a low-frequency transmission interface **17** electrically connected to the microcontroller unit **11** and adapted to transmit a low-frequency signal at 315MHz or 433MHz to an on-vehicle main unit or setting tool, a radio-frequency transmission interface **18** electrically connected to the microcontroller unit **11** and adapted to transmit a radio signal to the on-vehicle main unit or setting tool, and a magnetic force sensor unit **19**, for example, hall sensor electrically connected to the microcontroller unit **11** and adapted to sense the variation of a magnetic field and to convert the sensed waveform of the magnetic field into a corresponding signal and to output the signal to the microcontroller unit **11**. Further, the tire pressure sensor device **10** can be configured including only one of the low-frequency transmission interface **17** and the radio transmission interface **18**, or having both of them installed therein. Or alternatively, one of the low-frequency transmission interface **17** and the radio transmission interface **18** can be made in the form of a wire connection terminal for wired application.

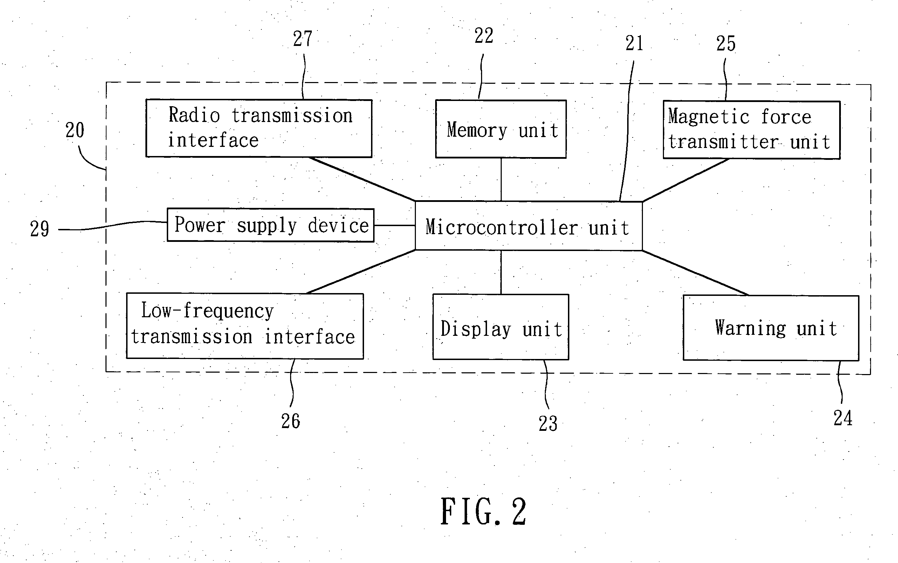

The setting tool **20** is configured to match the tire pressure sensor device **10.** As shown in FIG. 2, the setting tool **20** comprises a microcontroller unit **21**, a memory unit **22** electrically connected to the microcontroller unit **21** and adapted to store the ID of the tire pressure sensor device and related communication protocol data, a display unit **23** electrically connected to the microcontroller unit **21** and adapted to display the operating data of the setting tool **20**, a warning unit **24** electrically connected to the microcontroller unit **21** and controllable by the microcontroller unit **21** to provide a visual or audio warning signal, a magnetic force transmitter unit **25** electrically connected to the microcontroller unit **21** and controllable by the microcontroller unit **21** to transmit lines of magnetic flux, a low-frequency transmission interface **26** electrically connected to the microcontroller unit **11** and adapted to receive a low-frequency feedback signal transmitted by the tire pressure sensor device **10**, a radio-frequency transmission interface **27** electrically connected to the microcontroller unit **21** and adapted to receive a radio feedback signal transmitted by the tire pressure sensor device **10**, and a power supply device **29** adapted to provide the setting tool **20** with the necessary working electricity. Further, the setting tool **20** can be configured including only one of the low-frequency transmission interface **26** and the radio transmission interface **27**, or having both of them installed therein. Or alternatively, one of the low-frequency transmission interface **26** and the radio transmission interface **27** can be made in the form of a wire connection terminal for wired application.

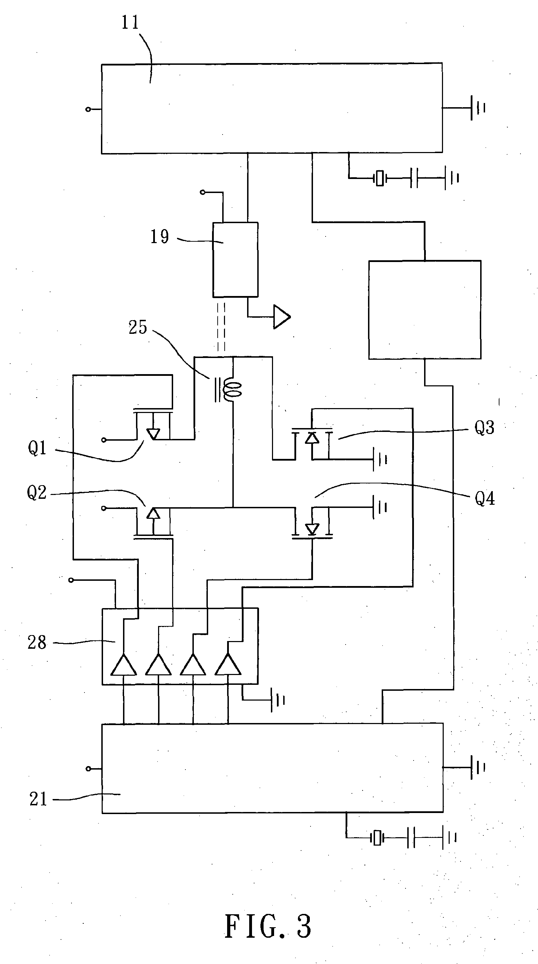

FIG. 3 is a circuit diagram of a part of the setting tool **20** and the tire pressure sensor device **10.** The microcontroller unit **21** of the setting tool **20** is electrically connected to four switches **28** for controlling four transistors, namely, the first transistor **Q1**, the second transistor **Q2**, the third transistor **Q3** and the fourth transistor **Q4.** The microcontroller unit **21** is also electrically connected to a bridge circuit formed of the aforesaid magnetic force transmitter unit **25**. Further, the third transistor **Q3** and the fourth transistor **Q4** are grounded. In this embodiment, the magnetic force transmitter unit **25** is an electromagnet.

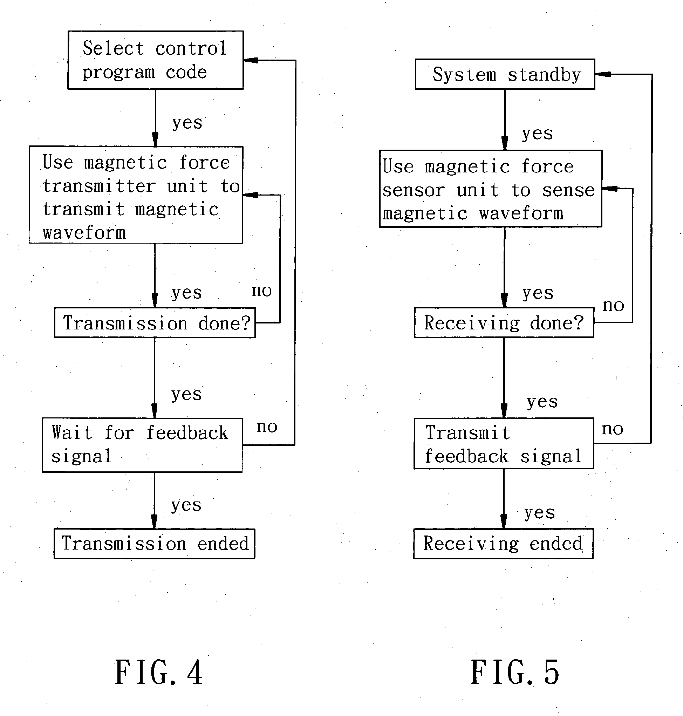

Referring to FIG. 4 and FIG. 5, based on the aforesaid tire pressure sensor device and setting tool, the operation of the present invention is outlined hereinafter. At first, select from the setting tool **20** the desired control program to be downloaded onto the tire pressure sensor device **10.** The control program varies with different car manufacturers and different car models. Thereafter, the microcontroller unit **21** of the setting tool **20** encodes the selected control program and then provides the encoded control program to the magnetic force transmitter unit **25** for transmission. The control can be done by, for example, enabling the microcontroller unit **21** to control the first transistor **Q1** and the fourth transistor **Q4** to be electrically conducted, and the second transistor **Q2** and the third transistor **Q3** to be electrically disconducted, thereby electrically conducting the electromagnet. At this time, the magnetic force sensor unit **19** of the tire pressure sensor device **10** will get to the N pole, and will then output Hi to the microcontroller unit **11** of the tire pressure sensor device **10.** If the microcontroller unit **21** controls the first transistor **Q1** and the fourth transistor **Q4** to be electrically disconducted, and the second transistor **Q2** and the third transistor **Q3** to be electrically conducted, the electromagnet will be conducted. At this time, the magnetic force sensor unit **19** of the tire pressure sensor device **10** will get to the S pole, and will then output Lo to the microcontroller unit **11** of the tire pressure sensor device **10.**

Subject to the above-stated structural features and control manner of the present invention, the magnetic force transmitter unit **25** of the setting tool **20** can be controlled to transmit the predetermined control program to the tire pressure sensor device **10.** After received the waveform outputted by the magnetic force sensor unit **19**, the microcontroller unit **11** of the tire pressure sensor device **10** restores the original control program by calculation, and then stores the control program in the memory unit **12.** The tire pressure sensor device setting tool **20** will repeatedly transmit the control program and wait for a feedback signal from the tire pressure sensor device **10.** Upon receipt of data, the microcontroller unit **11** of the tire pressure sensor device **10** makes calculations for error detection. If the received data is correct, the tire pressure sensor device **10** will provide a feedback signal to the tire pressure sensor device setting tool **20** via the radio transmission interface, low-frequency transmission interface, or wired transmission interface. The tire pressure sensor device setting tool stops the transmission of the control program immediately upon receipt of the feedback signal. In this embodiment, the control program can be a predetermined communication protocol, the ID of the tire pressure sensor device, or the combination of the predetermined communication protocol and the ID of the tire pressure sensor device.

As shown in FIG. 5, if the data received by the tire pressure sensor device **10** is incorrect, the tire pressure sensor device **10** will not provide any feedback signal to the tire pressure sensor device setting tool **20**. Before receiving a feedback signal, the tire pressure sensor device setting tool **20** will transmit the control program to the tire pressure sensor device again, and this operation will be repeatedly performed till that the tire pressure sensor device setting tool **20** receives a feedback signal.

Further, in order to eliminate the problem of counter-electromotive force (back electromotive force), the first transistor **Q1** and the second transistor **Q2**, enabling the third transistor **Q3** and the fourth transistor **Q4** to be electrically conducted, or all the first through fourth transistors **Q1-Q4** can be electrically disconducted, allowing bidirectional quick conversion of the magnetic force drive circuit. However, it is to be noted that the magnetic force drive circuit of the tire pressure sensor device setting tool is not limited to the design illustrated. Instead of the illustrated four-switch double-loop design, the magnetic force drive circuit can be made in the form of a single loop using one single switch to control one single transistor and the magnetic force transmitter unit, achieving the same magnetic force output effect. Using magnetic force to transmit signal not only can achieve a wireless signal transmission effect but also simplify the circuit design and save power consumption. Further, this method eliminates wireless regulatory constraints and significantly improves the drawbacks of the prior art design, achieving the objects of the present invention.

## Claims

1. A tire pressure sensor device setting method, comprising the steps of:
(a) providing a tire pressure sensor device (10) comprising a microcontroller unit (11), a memory unit (12) and a magnetic force sensor unit (19);
(b) providing a tire pressure sensor device setting tool (20) comprising a microcontroller unit (21) and a magnetic force transmitter unit (25);
(c) operating said tire pressure sensor device setting tool (20) to select a control program to be unloaded onto said tire pressure sensor device (10), enabling the selected control program to be encoded by the microcontroller unit (21) of said tire pressure sensor device setting tool (20) and then transmitted by said magnetic force transmitter unit (25) to said magnetic force sensor unit (19) of said tire pressure sensor device (10); and
(d) enabling the microcontroller unit (11) of said tire pressure sensor device (10) to decode the encoded control program been sensed by said magnetic force sensor unit (19) and then to store the decoded control program in said memory unit (12).

2. The tire pressure sensor device setting method as claimed in claim 1, wherein said control program comprises a tire pressure sensor device communication protocol.

3. The tire pressure sensor device setting method as claimed in claim 1, wherein said control program comprises the ID code of said tire pressure sensor device.

## Patentansprüche

1. Einstellverfahren für eine Reifendrucksensorvorrichtung, umfassend die Schritte:
a) Bereitstellen einer Reifendrucksensorvorrichtung (10), umfassend eine Mikrocontrollereinheit (11), eine Speichereinheit (12) und eine Magnetwirkungs-Sensoreinheit (19);
b) Bereitstellen eines Einstellwerkzeugs (20) für die Reifendrucksensorvorrichtung, umfassend eine Mikrocontrollereinheit (21) und eine Magnetwirkungs-Sendeeinheit (25);
c) Bedienen des Einstellwerkzeugs (20) für die Reifendrucksensorvorrichtung, um ein Steuerprogramm auszuwählen, das auf die Reifendrucksensorvorrichtung (10) geladen werden soll, und ermöglichen, dass das ausgewählte Steuerprogramm durch die Mikrocontrollereinheit (21) des Einstellwerkzeugs (20) für die Reifendrucksensorvorrichtung codiert wird und dann durch die Magnetwirkungs-Sendeeinheit (25) an die Magnetwirkungs-Sensoreinheit (19) der Reifendrucksensorvorrichtung (10) gesendet wird; und
d) Ermöglichen, dass die Mikrocontrollereinheit (11) der Reifendrucksensorvorrichtung (10) das codierte Steuerprogramm decodiert, das durch die Magnetwirkungs-Sensoreinheit (19) erfasst wurde, und dass das decodierte Steuerprogramm in der Speichereinheit (12) gespeichert wird.

2. Einstellverfahren für eine Reifendrucksensorvorrichtung nach Anspruch 1, wobei das Steuerprogramm ein Reifendrucksensorvorrichtungs-Kommunikationsprotokoll umfasst.

3. Einstellverfahren für eine Reifendrucksensorvorrichtung nach Anspruch 1, wobei das Steuerprogramm den ID-Code der Reifendrucksensorvorrichtung umfasst.

## Revendications

1. Procédé de réglage d'un dispositif capteur de pression de pneu, comprenant les étapes consistant à :
(a) fournir un dispositif capteur de pression de pneu (10) comprenant une unité de microcontrôleur (11), une unité de mémoire (12) et une unité de capteur de force magnétique (19) ;
(b) fournir un outil de réglage de dispositif capteur de pression de pneu (20) comprenant une unité de microcontrôleur (21) et une unité d'émetteur de force magnétique (25) ;
(c) faire fonctionner ledit outil de réglage de dispositif capteur de pression de pneu (20) pour sélectionner un programme de commande destiné à être déchargé sur ledit dispositif capteur de pression de pneu (10), permettre au programme de commande sélectionné d'être encodé par l'unité de microcontrôleur (21) dudit outil de réglage de dispositif capteur de pression de pneu (20) puis transmis par ladite unité d'émetteur de force magnétique (25) à ladite unité de capteur de force magnétique (19) dudit dispositif capteur de pression de pneu (10) ; et
(d) permettre à l'unité de microcontrôleur (11) dudit dispositif capteur de pression de pneu (10) de décoder le programme de commande encodé étant détecté par ladite unité de capteur de force magnétique (19) puis de stocker le programme de commande décodé dans ladite unité de mémoire (12).

2. Procédé de réglage d'un dispositif capteur de pression de pneu selon la revendication 1, dans lequel ledit programme de commande comprend un protocole de communication de dispositif capteur de pression de pneu.

3. Procédé de réglage d'un dispositif capteur de pression de pneu selon la revendication 1, dans lequel ledit programme de commande comprend le code d'identification dudit dispositif capteur de pression de pneu.
